# EUROPEAN PATENT APPLICATION

(11) **EP 4 679 560 A1**
(43) Date of publication of application: **14.01.2026**
(21) Application number: 25187702.3
(22) Date of filing: 07.07.2025
(51) Int. Cl.: H01M 10/42, H01M 4/62, C01D 7/00, C01D 13/00, H01M 10/054, H01M 4/13, H01M 4/36, H01M 4/02

(54) **SODIUM SUPPLEMENT MATERIAL, PREPARATION METHOD THEREOF, POSITIVE ELETRODE PLATE AND SODIUM ION BATTERY**

(30) Priority: 09.07.2024 CN 202410916800
(71) Applicant: Hithium Tech HK Limited, Kowloon, Hong Kong (HK)
(72) Inventor: TU, Long, Fujian, 361100 (CN); WANG, Wei, Fujian, 361100 (CN); ZHANG, Guodong, Fujian, 361100 (CN); WANG, Shiwen, Fujian, 361100 (CN)
(74) Representative: RGTH

(57) **Abstract**

The present disclosure provides a sodium supplement material, its preparation method, positive eletrode plate, and sodium-ion battery. The sodium supplement material includes a sodium supplement agent body and first particles exposed on the surface of the sodium supplement agent body. In any 300 nm × 200 nm region on the surface of the sodium supplement material, the number of first particles ranges from 2 to 20. The first particles include one or more conductive agent particles and one or more catalyst particles.

## Description

### TECHNICAL FIELD

The present disclosure relates to the field of electrochemistry, and in particular, to a sodium supplement material, a preparation method thereof, a positive electrode plate, and a sodium-ion battery.

### BACKGROUND

Sodium-ion batteries have advantages such as low cost, abundant sodium resources, and relatively high energy density, making them potential replacements for traditional lithium-ion batteries in energy storage applications.

### SUMMARY

The present disclosure discloses a sodium supplement material, its preparation method, a positive electrode plate, and a sodium-ion battery.

In a first aspect, the present disclosure provides a sodium supplement material including a sodium supplement agent body and first particles exposed on the surface of the sodium supplement agent body. In any 300 nm × 200 nm region on the surface of the sodium supplement material, the number of first particles ranges from 2 to 20. The first particles include one or more conductive agent particles and one or more catalyst particles.

In some embodiments of the present disclosure, the first particles are partially encapsulated by the sodium supplement agent body, which is formed by melting and cooling a sodium supplement agent raw material.

In some embodiments of the present disclosure, the sodium supplement material includes a sodium supplement agent body, conductive agent particles, and catalyst particles. Based on the total mass of the sodium supplement material, the sodium supplement agent body has a mass percentage of 40% to 80%, the conductive agent particles have a mass percentage of 10% to 40%, and the catalyst particles have a mass percentage of 10% to 20%.

In some embodiments of the present disclosure, the sodium supplement material has an average particle size D50 of 0.7 µm to 2.0 µm.

In some embodiments of the present disclosure, the diameter of the portion of the first particles exposed on the sodium supplement agent body surface is 10 nm to 70 nm.

In some embodiments of the present disclosure, the catalyst particles include at least one selected from the group consisting of titanium dioxide, manganese dioxide, tin dioxide, ruthenium dioxide, molybdenum dioxide, manganese oxide, zirconium dioxide, tricobalt tetraoxide, and trimanganese tetraoxide.

In some embodiments of the present disclosure, the sodium supplement agent body includes at least one selected from the group consisting of Na₂C₄O₄, Na₂CO₃, CH₃COONa, C₆H₅Na₃O₇, Na₂C₂O₄, and Na₂C₆O₆.

In some embodiments of the present disclosure, the conductive agent particles include at least one selected from the group consisting of conductive carbon black, carbon nanotubes, Ketjenblack, acetylene black, carbon black graphene, graphene oxide, and reduced graphene oxide.

In a second aspect, the present disclosure provides a preparation method for the sodium supplement material described in the first aspect, including the following steps:
mixing a particle-size-controlled sodium supplement agent raw material with conductive agent particles and catalyst particles to obtain a mixture, wherein the particle-size-controlled sodium supplement agent raw material has an average particle size D50 of 0.3 µm to 2.0 µm;
calcining the mixture under a gaseous atmosphere at a temperature of 300°C to 500°C for 1 to 8 hours to obtain the sodium supplement material.

In some embodiments of the present disclosure, during calcination, the sodium supplement agent raw material melts, and the conductive agent particles and catalyst particles disperse into the molten sodium supplement agent raw material. During cooling, the sodium supplement agent raw material solidifies and precipitates using the conductive agent particles as a skeleton to form the sodium supplement agent body. Conductive agent particles and catalyst particles are partially embedded in the sodium supplement agent body, with another portion exposed on the sodium supplement agent body surface.

In a third aspect, the present disclosure provides a positive electrode plate including a positive current collector and a positive active material layer disposed on at least one surface of the current collector. The positive active material layer includes the sodium supplement material described in the first aspect or prepared by the method of the second aspect.

In a fourth aspect, the present disclosure provides a sodium-ion battery including the positive electrode plate of the third aspect.

In a fifth aspect, the present disclosure provides an energy storage device including a casing and at least one sodium-ion battery of the fourth aspect, wherein the sodium-ion battery is housed within the casing.

In a sixth aspect, the present disclosure provides an electric apparatus including the energy storage device of the fifth aspect, wherein the energy storage device supplies power to the electric apparatus.

### BRIEF DESCRIPTION OF THE DRAWINGS

To more clearly illustrate the technical solutions in the embodiments of the present disclosure, the following provides a brief description of the accompanying drawings required for the embodiments. Obviously, the drawings described below pertain to some embodiments of the present disclosure. For those skilled in the art, other drawings may be derived from these figures without creative efforts.
FIG. 1 is a scanning electron microscope (SEM) image of the sodium supplement material prepared in Example 1 of the present disclosure.
FIG. 2 is a schematic structural diagram of a household energy storage system according to an embodiment of the present disclosure.
FIG. 3 is a schematic structural diagram of an energy storage system according to an embodiment of the present disclosure.
FIG. 4 shows the first charge/discharge curve of the first coin cell in Example 1.
FIG. 5 shows the first charge/discharge curve of the first coin cell in Comparative Example 1.
FIG. 6 shows the first charge/discharge curve of the second coin cell in Example 1.
FIG. 7 shows the first charge/discharge curve of the second coin cell in Comparative Example 1.

The reference signs are explained as follows:
1: Energy storage device
2: Power conversion device
3: First user load
4: Second user load
400: Energy storage system
410: High-voltage cable
420: First power conversion device
430: Second power conversion device

### DETAILED DESCRIPTION

The following describes the technical solutions in the embodiments of the present disclosure clearly and comprehensively with reference to the accompanying drawings. Obviously, the described embodiments are only a part of the embodiments of the present disclosure, not all of them. Based on the embodiments of the present disclosure, all other embodiments obtained by those skilled in the art without creative efforts shall fall within the scope of protection of the present disclosure.

In The present disclosure, terms such as "upper", "lower", "left", "right", "front", "rear", "top", "bottom", "inner", "outer", "vertical", "horizontal", "lateral", and "longitudinal" describe orientation or positional relationships based on those shown in the accompanying drawings. These terms are used primarily to facilitate the description of the present disclosure and its embodiments, and are not intended to limit the specified devices, components, or parts to a specific orientation or configuration.

Additionally, some of the above terms may also imply other meanings beyond orientation or positional relationships. For example, the term "upper" may, in certain contexts, indicate an attachment or connection relationship. Those skilled in the art may interpret the specific meanings of these terms in the present disclosure based on the context.

Furthermore, terms such as "install", "arrange", "provided with", "connect" and "connected" shall be interpreted broadly. For example, connections may be fixed, detachable, or integral; mechanical or electrical; direct, indirect through an intermediary, or internal communication between two devices, components, or parts. Those skilled in the art may interpret the specific meanings of these terms in the present disclosure based on the context.

Furthermore, Terms such as "first", "second" and the like are used primarily to distinguish between different devices, components, or parts (which may or may not differ in type or structure) and do not imply relative importance or quantity. Unless otherwise specified, "multiple" means two or more.

It should be noted that while the sodium-ion battery is used as an example of the secondary battery to explain the present disclosure, the secondary battery in the present disclosure is not limited to sodium-ion batteries.

Currently, in composite sodium supplement materials, the sodium supplement agent, conductive agent, and catalyst are typically connected through simple physical mixing. When such materials are added to the positive active material, the sodium supplement agent, conductive agent, and catalyst may separate. This significantly hinders the conductive and catalytic effects on the sodium supplement agent, limiting the practical sodium supplementation efficacy of the material.

In view of this, the present disclosure provides a sodium supplement material including a sodium supplement agent body and first particles exposed on the surface of the sodium supplement agent body. In any 300 nm × 200 nm region on the surface of the sodium supplement material, the number of first particles ranges from 2 to 20, including but not limited to 2, 3, 5, 7, 9, 10, 12, 14, 15, 16, 18, or 20 particles. The first particles include conductive agent particles and catalyst particles.

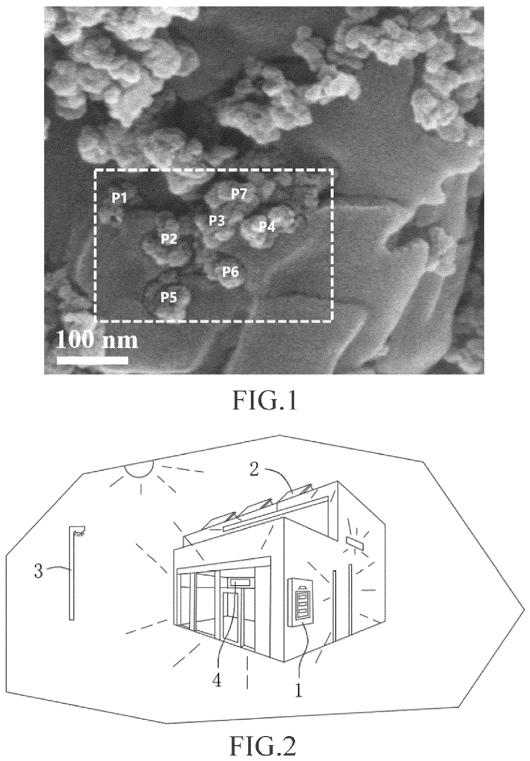

In the present disclosure, the sodium supplement material can be observed using a scanning electron microscope at 10,000× to 20,000× magnification. The 300 nm × 200 nm region may be any preselected area on the surface of material. For example, as shown in FIG. 1, it could be a rectangular region of 300 nm × 200 nm. Without being bound by any theory, when the number of exposed first particles is too low (e.g., fewer than 2), the conductivity and catalytic activity of the material decrease, which is unfavorable for reducing the oxidative decomposition potential of the sodium supplement material. Conversely, when the number of exposed first particles is too high (e.g., more than 20), the relative content of conductive agent particles and catalyst particles increases while that of the sodium supplement agent body decreases, which also hinders the sodium supplementation efficacy. By controlling the particle number within the specified range, the conductive agent particles facilitate electron transport into the sodium supplement agent body, thereby shortening the electron transfer distance between the conductive agent particles and the sodium supplement agent body and improving electron utilization efficiency. Additionally, the conductive agent enhances the conductivity of the catalyst particles, amplifying their catalytic effect and further lowering the oxidative decomposition potential of the material. Collectively, these factors promote the oxidative decomposition process of the sodium supplement agent body, resulting in a material with a lower decomposition potential. This significantly improves the first-cycle sodium supplementation performance of the material and enhances the energy density and cycling performance of sodium-ion batteries.

In some embodiments of the present disclosure, the first particles are partially encapsulated by the sodium supplement agent body, which is formed by melting and cooling the sodium supplement agent raw material. The conductive agent and catalyst in the present disclosure have higher melting points than the sodium supplement agent raw material. After the raw material melts, the molten material solidifies and precipitates using the conductive agent particles as a skeleton during cooling, thereby forming the sodium supplement agent body. This process embeds a portion of the first particles (including conductive agent particles and catalyst particles) within the sodium supplement agent body while exposing another portion on its surface, i.e., the first particles are partially encapsulated by the sodium supplement agent body. This configuration shortens the electron transport distance between the conductive agent particles and the sodium supplement agent body. Furthermore, the conductive agent particles and catalyst particles in the sodium supplement material remain stably integrated into its structure rather than dispersing within the positive active material. Compared to conventional sodium supplement materials formed by simple mixing of sodium supplement agents, conductive agents, and catalysts, this design significantly enhances the effective utilization of the conductive and catalytic components. This synergistically promotes the oxidative decomposition of the sodium supplement agent body, resulting in a lower decomposition potential for the material and improved first-cycle sodium supplementation performance.

In some embodiments of the present disclosure, the sodium supplement material includes the sodium supplement agent body, conductive agent particles, and catalyst particles. Based on the total mass of the material, the sodium supplement agent body has a mass percentage of 40% to 80%, including but not limited to 40%, 50%, 60%, 70%, or 80%; the conductive agent particles have a mass percentage of 5% to 40%, including but not limited to 5%, 20%, 30%, or 40%; the catalyst particles have a mass percentage of 5% to 20%, including but not limited to 5%, 10%, 15%, or 20%. Adjusting the mass ratios of these components within the specified ranges facilitates the formation of the sodium supplement material with the disclosed structure. Specifically, it ensures that the number of conductive agent particles and catalyst particles exposed on the sodium supplement agent body surface falls within the claimed range, thereby achieving the desired structural and functional properties.

In some embodiments of the present disclosure, the sodium supplement material has an average particle size D50 of 0.7 µm to 2.0 µm. The D50 represents the particle size at which 50% of the cumulative volume fraction distribution is reached. For example, the D50 may be 0.7 µm, 0.9 µm, 1.0 µm, 1.1 µm, 1.2 µm, 1.5 µm, 1.7 µm, or 2.0 µm. By controlling the D50 within this range, the electron transport distance between sodium supplement material particles is effectively reduced, further promoting the oxidative decomposition process of the sodium supplement agent body and lowering the oxidative decomposition potential of the material.

In some embodiments of the present disclosure, the diameter of the portion of the first particles exposed on the sodium supplement agent body surface is 10 nm to 70 nm, including but not limited to 10 nm, 20 nm, 30 nm, 40 nm, 50 nm, 60 nm, or 70 nm. Research by the inventors has shown that controlling the exposed portion diameter within this range not only maintains the conductive agent particles and catalyst particles within a smaller particle size to enhance encapsulation effectiveness but also improves their utilization efficiency in the sodium supplement material. This synergistically accelerates the oxidative decomposition of the sodium supplement agent body.

In the present disclosure, the portion of the first particles exposed on the sodium supplement agent body surface (hereinafter referred to as the "exposed portion") is not limited to a geometrically defined circular shape. When the exposed portion is non-circular, its diameter is defined as the maximum length of the exposed portion in the horizontal direction of the SEM image of the sodium supplement material.

In some embodiments of the present disclosure, the catalyst particles include at least one selected from the group consisting of titanium dioxide, manganese dioxide, tin dioxide, ruthenium dioxide, molybdenum dioxide, manganese oxide, zirconium dioxide, tricobalt tetraoxide, and trimanganese tetraoxide. The aforementioned catalyst particles help reduce the oxidative decomposition potential of the sodium supplement material, thereby enhancing its first-cycle sodium supplementation efficacy.

In some embodiments of the present disclosure, the sodium supplement agent body includes at least one selected from the group consisting of Na₂C₄O₄, Na₂CO₃, CH₃COONa, C₆H₅Na₃O₇, Na₂C₂O₄, and Na₂C₆O₆. These sodium supplement agents are organic compounds, offering advantages such as environmental friendliness, wide availability, and safety.

In some embodiments of the present disclosure, the conductive agent particles include at least one selected from the group consisting of conductive carbon black, carbon nanotubes (CNT), Ketjenblack (KB), acetylene black (ACET), graphene, graphene oxide, and reduced graphene oxide (rGO). The aforementioned conductive agents exhibit excellent conductivity and high specific surface area. During the cooling process of the molten sodium supplement agent raw material, they serve as a skeleton, enhancing the electronic conductivity of the sodium supplement material and promoting electron transport on its surface. This effectively reduces the oxidative decomposition potential of the sodium supplement material.

In second aspect, the present disclosure provides a preparation method for the sodium supplement material described in the first aspect, including the following steps:
Step A: mixing a particle-size-controlled sodium supplement agent raw material with a conductive agent particles and catalyst particles to obtain a mixture, wherein the particle-size-controlled sodium supplement agent raw material has an average particle size D50 of 0.3 µm to 2.0 µm, including but not limited to 0.3 µm, 0.5 µm, 0.8 µm, 1.0 µm, 1.5 µm or 2.0 µm;
Step B: calcining the mixture under a gaseous atmosphere, wherein the calcination temperature is 300°C to 500°C, preferably 400°C to 500°C, including but not limited to 300°C, 350°C, 400°C, 450°C, or 500°C; the calcination time is 1 to 8 hours, preferably 4 to 6 hours, including but not limited to 1 h, 4 h, 5 h, 6 h, or 8 h, to obtain the Sodium Supplement material after cooling.
In Step A, particle size control of the sodium supplement agent raw material ensures it falls within the specified range. As the particle size decreases, the specific surface area increases, facilitating more uniform distribution of the conductive agent particles and catalyst particles on the surface of raw material. During subsequent calcination, this uniformity allows the conductive agent particles and catalyst particles to disperse evenly within the molten sodium supplement agent raw material. Upon cooling and solidification, these particles become uniformly distributed and partially exposed on the surface of the resulting sodium supplement agent body. This structural configuration enhances the sodium supplementation performance of the material.

The present disclosure can regulate the particle size of the sodium supplement agent raw material through treatment methods such as recrystallization treatment, ball milling treatment, crushing treatment, or spray drying treatment, with no specific limitations imposed. Commercially available sodium supplement agent raw materials often suffer from excessively large particle sizes, and particle size control treatment can effectively reduce the particle size of the sodium supplement agent raw material.

In Step B, by controlling the calcination temperature and time within the specified ranges, the sodium supplement agent raw material melts while the conductive agent particles and catalyst particles remain unmelted. This ensures the formation of the sodium supplement material with the desired structure.

For adjustment methods of the number of first particles exposed on the sodium supplement agent body surface, the present disclosure imposes no specific restrictions on methods, provided the objectives of the present disclosure are achieved. As an illustrative example, the number can be controlled by adjusting the content of the conductive agent particles and catalyst particles, and/or by adjusting the calcination temperature.

In some embodiments of the present disclosure, during the calcination process, the sodium supplement agent raw material melts, and the conductive agent particles and catalyst particles disperse into the molten sodium supplement agent raw material. During cooling, the molten sodium supplement agent raw material solidifies and precipitates using the conductive agent particles as a skeleton to form the sodium supplement agent body. A portion of the conductive agent particles and catalyst particles becomes embedded within the sodium supplement agent body, while another portion remains exposed on its surface.

Through the calcination and cooling process described in the present disclosure, the molten sodium supplement agent raw material solidifies around the conductive agent particles as a sketeton during cooling. This results in a sodium supplement material with the claimed structure, where conductive and catalytic particles are partially embedded and partially exposed. The resulting material exhibits a lower oxidative decomposition potential.

The preparation method for the sodium supplement material provided in the present disclosure features a simple process, non-toxic and safe raw materials, and yields a product with excellent sodium supplementation performance and low production costs. This approach not only enhances the energy density and cycling performance of sodium-ion batteries but also reduces their manufacturing expenses.

The present disclosure further provides a positive electrode plate including a current collector and a positive active material layer disposed on at least one surface of the current collector. The positive active material layer includes the sodium supplement material described in any of the aforementioned embodiments or the sodium supplement material prepared by the preparation method described in any of the aforementioned embodiments.

The positive active material layer may be disposed on one or both surfaces of the positive current collector along its thickness direction. In the present disclosure, the positive active material layer is arranged on the surface of the positive current collector. Specifically, it may cover partial or full area of one surface of the positive current collector. The present disclosure imposes no specific limitations on the positive current collector, provided it fulfills the objectives of the present disclosure. Examples include, but are not limited to, aluminum foil, aluminum alloy foil, or composite current collectors. The thickness of the positive current collector is not strictly defined, provided it meets the requirements of the present disclosure. For instance, it may range from 8 µm to 13 µm. The thickness of the positive active material layer may be 150 µm to 400 µm.

In the present disclosure, the positive active material layer further includes a positive active material. The present disclosure imposes no specific restrictions on the positive active material, provided it achieves the intended purpose. Examples include, but are not limited to, at least one selected from the group consisting of sodium nickel manganese oxide, sodium nickel iron manganese oxide, sodium iron sulfate, sodium vanadium phosphate, sodium copper iron manganese oxide, sodium iron pyrophosphate, and sodium iron pyrophosphate.

In the present disclosure, the positive active material layer may further include a positive conductive agent. The present disclosure imposes no specific limitations on the positive conductive agent, provided it fulfills the objectives of the present disclosure. Examples include, but are not limited to, at least one selected from the group consisting of conductive carbon black (Super P), carbon nanotubes (CNT), Ketjenblack (KB), graphene, graphene oxide, and acetylene black. The mass percentage of the conductive agent in the positive active material layer is 10% to 40%. Additionally, the positive active material layer may include a positive binder. The present disclosure imposes no specific restrictions on the positive binder, provided it meets the requirements of the present disclosure. Examples include, but are not limited to, at least one selected from the group consisting of fluorine-containing resins, polypropylene resins, fibrous binders, rubber binders, polyimide binders, and polyvinylidene fluoride (PVDF).

The present disclosure also provides a sodium-ion battery including the positive electrode plate described in any of the aforementioned embodiments.

The sodium-ion battery of the present disclosure further includes a negative electrode plate, a separator, and an electrolyte. The separator is positioned between the positive and negative electrode plates and serves as an insulating barrier.

The present disclosure imposes no specific restrictions on the negative electrode plate, provided it fulfills the objectives of the present disclosure. For example, the negative electrode plate typically includes a negative current collector and a negative active material layer. The negative active material layer may be disposed on the surface of the negative current collector, covering either a partial or full area of one surface. The negative current collector is not strictly limited and may include, but is not limited to, copper foil, copper alloy foil, nickel foil, or composite current collectors. The thickness of the negative current collector is not rigidly defined, provided it meets the requirements of the present disclosure. For instance, it may range from 4 µm to 12 µm. The thickness of the negative active material layer may be 70 µm to 200 µm.

In the present disclosure, the negative active material layer may further include a negative binder. The present disclosure imposes no specific limitations on the negative binder, provided it achieves the intended purpose. Examples include at least one selected from the group consisting of acrylic ester, polyamide, polyimide, polyamide-imide, polyvinylidene fluoride, styrene-butadiene rubber, sodium alginate, polyvinyl alcohol, polytetrafluoroethylene, and sodium carboxymethyl cellulose.

In some embodiments of the present disclosure, the separator material may include at least one selected from the group consisting of glass fiber, non-woven fabric, polyethylene, polypropylene, and polyvinylidene fluoride. The separator may be a single-layer film or a multilayer composite film, with no specific limitations. For multilayer composite films, the materials of each layer may be same or different, without restriction.

The sodium-ion battery of the present disclosure further includes an electrolyte. The present disclosure imposes no specific limitations on the electrolyte, and those skilled in the art may select it based on practical needs, provided it fulfills the objectives of the present disclosure . For example, a non-aqueous organic solvent can be prepared by mixing at least one selected from the group consisting of ethylene carbonate (EC), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) in specific mass or volume ratios. A sodium salt is then dissolved and homogenized in the solvent. The sodium salt is not restricted in type, provided it meets the requirements of the present disclosure. Examples include at least one selected from the group consisting of sodium hexafluorophosphate, sodium perchlorate, sodium tetrafluoroborate, sodium trifluoromethanesulfonate, and sodium p-toluenesulfonate. The present disclosure imposes no specific limitations on the the concentration of sodium salt in the electrolyte, provided it fulfills the objectives of the present disclosure. For example, the concentration of sodium salt may be 1.0 mol/L to 2.0 mol/L.

The sodium-ion battery of the present disclosure also includes a casing. There are no specific restrictions on the casing, and those skilled in the art may choose it based on practical needs, provided it fulfills the objectives of the present disclosure. For instance, the casing may include an aluminum-laminated film.

The present disclosure imposes no specific restrictions on the preparation method for sodium-ion batteries and may employ any conventional method known in the art, provided it fulfills the objectives of the present disclosure. For example, the preparation method includes, but is not limited to, the following steps: stacking the positive electrode plate, separator, and negative electrode plate in sequence, then winding or folding them as needed to form a wound bare cell; placing the bare cell is placed into a packaging pouch, injecting with electrolyte, and sealing to obtain the sodium-ion battery.

The present disclosure further provides an energy storage device including a casing and at least one sodium-ion battery described in any of the aforementioned embodiments. The sodium-ion battery is housed within the casing. The energy storage device exhibits superior performance due to the inclusion of the disclosed sodium-ion battery, enhancing its practical utility. Encasing the battery within the casing improves structural stability and protection, extending the operational lifes of devices. Notably, the energy storage device may contain one or multiple sodium-ion batteries. When multiple batteries are included, they may be connected in parallel, series, or a combination thereof.

The present disclosure also provides electric apparatus including the energy storage device according to any of the aforementioned embodiments, which is conducive to enhancing the product competitiveness and performance of the electric apparatus. In one optional embodiment, the electric apparatus includes an apparatus body, where the energy storage device supplies power to the apparatus body. In another optional embodiment, the apparatus body includes a positive terminal and a negative terminal. The positive electrode plate of the sodium-ion battery in the energy storage device is electrically connected to the positive terminal of the apparatus, while the negative electrode plate is electrically connected to the negative terminal of the apparatus, thereby powering the apparatus.

The electric apparatus in the present disclosure may include but is not limited to containers, household energy storage systems, electric bicycles, electric vehicles, ships, spacecrafts, electric toys, electric tools, and the like. Spacecrafts include, for example, airplanes, rockets, space shuttles, spaceships, and the like. Electric toys include, for example, stationary or mobile electric toys, specifically such as electric vehicle toys, electric ship toys, electric airplane toys, and the like. Electric tools include, for example, metal-cutting electric tools, grinding electric tools, assembly electric tools, and railway electric tools, specifically such as electric drills, electric grinders, electric wrenches, electric screwdrivers, electric hammers, impact drills, concrete vibrators, and electric planers.

Refer to FIG. 2, which illustrates a schematic structural diagram of a household energy storage system according to an embodiment of the present disclosure. The embodiment in FIG. 2 uses a household energy storage scenario on the user side as an example, though the energy storage device of the present disclosure is not limited to such scenarios.

The present disclosure provides a household energy storage system, including a power conversion device 2 (e.g., photovoltaic panels), a first user load 3 (e.g., streetlights), a second user load 4 (e.g., household appliances such as air conditioners), and an energy storage device 1.The energy storage device 1 is designed as a small-scale storage box that can be wall-mounted on outdoor walls. Specifically, the photovoltaic panels convert solar energy into electricity during off-peak electricity periods. The energy storage device 1 stores this energy and supplies it to the streetlights and household appliances during peak hours or during grid outages/power failures.

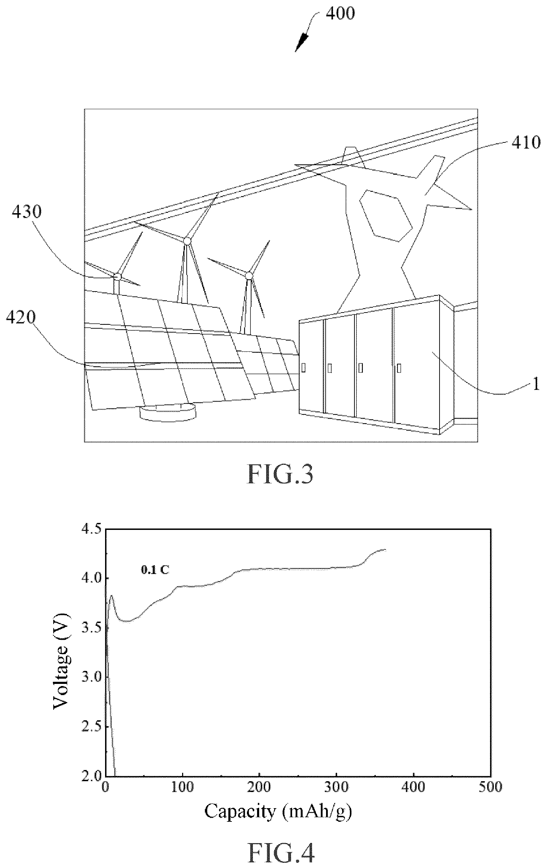

Refer to FIG. 3, which illustrates a schematic structural diagram of an energy storage system 400 according to an embodiment of the present disclosure. The embodiment in FIG. 3 uses a shared energy storage scenario on the generation/distribution side as an example. However, the energy storage device 1 of the present disclosure is not limited to such scenarios.

The present disclosure provides an energy storage system 400. The energy storage system 400 includes a high-voltage cable 410, a first power conversion device 420, a second power conversion device 430, and the energy storage device 1 provided in the present disclosure. During power generation, the first power conversion device 420 and second power conversion device 430 convert other forms of energy into electrical energy, connect with the high-voltage cable 410 to supply power to the the demand side the distribution grid. When electricity load is low and the first power conversion device 420 or second power conversion device 430 generates excess power, surplus electricity is stored in the energy storage device 1 to reduce wind/solar power curtailment rates and improve renewable energy integration. During peak electricity demand periods, the grid issues commands to discharge stored energy from the energy storage device 1 through coordinated operation with the high-voltage cable 410 in grid-connected mode to supply power consumers, providing multiple grid services including peak shaving, frequency regulation, and backup power supply. This configuration fully leverages grid peak regulation capabilities, promotes load shifting between peak and off-peak periods, and alleviates grid power supply pressure.

Optionally, the first power conversion device 420 and second power conversion device 430 may convert at least one selected from the group consisting of solar energy, light energy, wind energy, thermal energy, tidal energy, biomass energy, and mechanical energy into electrical energy.

The number of energy storage devices 1 may be multiple. These devices may be connected in series or parallel and supported/electrically interconnected via partition plates (not shown in figures). In this embodiment, "multiple" refers to two or more. The energy storage device(s) 1 may also be housed within an external energy storage enclosure.

Optionally, the energy storage device 1 may include but is not limited to single battery cells, battery modules, battery packs, and battery systems. The single battery cell may be a sodium-ion battery of the present disclosure. The battery module may be formed by connecting multiple sodium-ion batteries of the present disclosure in series/parallel. The battery pack may include multiple sodium-ion batteries of the present disclosure. The battery system may be a charge/discharge system including the sodium-ion batteries or battery packs of the present disclosure.

The practical application forms of the energy storage device 1 provided in the present disclosure may include but are not limited to the listed products and may also adopt other forms. The present disclosure imposes no strict limitations on the present disclosure forms of the energy storage device 1. The present disclosure uses the energy storage device 1 as a multi-cell battery for illustrative purposes only. When the energy storage device 1 is a single battery cell, it may include at least one selected from the group consisting of cylindrical batteries, prismatic batteries, or similar types.

### Examples

The following examples and comparative examples are provided to illustrate the embodiments of the present disclosure in greater detail. All tests and evaluations were conducted using the methods described below.

### Example 1

### < Preparation of Sodium Supplement Material >

50 g of commercially available disodium oxalate (Na₂C₄O₄) powder was added to a crusher for particle size reduction. The crusher operated at 20,000 rpm, with each crushing cycle lasting 30 seconds, repeated 30 times. After sieving, a sodium supplement agent raw material with an average particle size D50 of 1 µm was obtained. The processed sodium supplement agent raw material was mixed with conductive carbon black (Super P) and titanium dioxide (TiO₂) catalyst at a mass ratio of 60:20:20 to form a mixture. Subsequently, 20 g of the mixture was calcined under a nitrogen atmosphere at 400°C for 6 hours. After crushing and sieving, the final sodium supplement material exhibited an average particle size D50 of 0.83 µm.

The prepared sodium supplement material was examined via scanning electron microscopy (SEM) at 10,000× magnification. In any 300 nm × 200 nm region on the material's surface (i.e., per unit area), the number of first particles observed was 6.

### < Preparation of Sodium Supplement Agent Electrode Plate >

The prepared sodium supplement material, conductive agent Ketjenblack (KB), and binder PVDF were mixed at a mass ratio of 60:30:10. Solvent N-methylpyrrolidone (NMP) was added, and the mixture was stirred uniformly to obtain a sodium supplement slurry with a solid content of 60%. The slurry was evenly coated onto a 10 µm-thick aluminum foil with a single-side coating thickness of 20 µm. The coated foil was vacuum-dried at 110°C for 12 hours to obtain the sodium supplement electrode plate. The resulting electrode plate was cut into 14 mm-diameter discs for later use.

### < Preparation of NFPP Positive Electrode Plate >

Positive active material Na₄Fe₃(PO₄)₂(P₂O₇) (NFPP), the prepared sodium supplement material, conductive agent Ketjenblack, and binder PVDF were mixed at a mass ratio of 60:20:10:10. NMP was added, and the mixture was stirred uniformly to obtain a positive slurry with a solid content of 60%. The slurry was evenly coated onto a 10 µm-thick aluminum foil with a single-side coating thickness of 20 µm. The coated foil was vacuum-dried at 110°C for 12 hours to obtain the NFPP positive electrode plate. The resulting positive eletrode plate was cut into 14 mm-diameter discs for later use.

### < Preparation of Electrolyte >

In an argon-filled glovebox with a moisture content ≤1 ppm, ethylene carbonate (EC) and diethyl carbonate (DEC) were mixed in a volume ratio of 1:1. Sodium salt NaClO₄ was then dissolved in into the aforementioned solvent, then mix uniformly to obtain the electrolyte. The molar concentration of NaClO₄ in the electrolyte is 1 mol/L.

### < Preparation of Separator >

A glass fiber membrane with a thickness of 260 µm was selected as the separator.

### < Assembly of Coin Cell >

### < Assembly of First Coin Cell >

A circular sodium disc with a diameter of 14 mm was used as the counter electrode. The prepared circular sodium supplement electrode plate, separator, and sodium disc were sequentially stacked, with the separator positioned between the sodium supplement electrode plate and sodium disc to act as an insulating barrier. The prepared electrolyte was injected, and the first coin cell was assembled.

### <Assembly of second Coin Cell>

A circular sodium disc with a diameter of 14 mm was used as the counter electrode. The prepared NFPP positive electrode plate, separator, and sodium disc were sequentially stacked, with the separator positioned between the NFPP positive electrode plate and sodium disc to act as an insulating barrier. The prepared electrolyte was injected, and the second coin cell was assembled.

### Examples 2 to 5

Except for adjusting the content of the sodium supplement agent raw material, conductive agent, and catalyst in < Preparation of Sodium Supplement Material > according to Table 1, all other steps were same as Example 1.

### Examples 6 to 8

Except for adjusting the type of sodium supplement agent raw material in < Preparation of Sodium Supplement Material > according to Table 1, all other steps were same as Example 1.

### Examples 9 to 11

Except for adjusting the type of conductive agent in < Preparation of Sodium Supplement Material > according to Table 1, all other steps were same as Example 1.

### Examples 12 to 14

Except for adjusting the type of catalyst in < Preparation of Sodium Supplement Material > according to Table 1, all other steps were same as Example 1.

### Examples 15 to 17

Except for adjusting the calcination temperature and time in < Preparation of Sodium Supplement Material > according to Table 2, all other steps were same as Example 1.

### Comparative Example 1

Except for directly using the crushed Na₂C₄O₄ from Example 1 as the sodium supplement material, all other steps were same as Example 1.

### Comparative Example 2

Except for < Preparation of Sodium Supplement Material >, which is different from Example 1, all other steps were same as Example 1.

### < Preparation of Sodium Supplement Material >

50 g of commercially available disodium oxalate (Na₂C₄O₄) powder was added to a crusher for particle size reduction. The crusher operated at 20,000 rpm, with each crushing cycle lasting 30 seconds, repeated 30 times. After sieving, a sodium supplement agent raw material with an average particle size D50 of 1 µm was obtained. The processed sodium supplement agent raw material was mixed with conductive carbon black (Super P) and titanium dioxide (TiO₂) catalyst at a mass ratio of 60:20:20. The resulting mixture was directly used as the sodium supplement material without undergoing calcination.

### Comparative Example 3

No sodium supplement material was prepared. Specifically, the first coin cell was not assembled. The NFPP positive electrode plate was prepared without incorporating the sodium supplement material. All other steps were same as Example 1.

### < Preparation of NFPP Positive Electrode Plate >

The positive active material NFPP, Ketjenblack, and PVDF were mixed at a mass ratio of 80:10:10. NMP was added, and the mixture was stirred uniformly to obtain a positive slurry with a solid content of 60%. The slurry was evenly coated onto a 10 µm-thick aluminum foil with a single-side coating thickness of 20 µm. The coated foil was vacuum-dried at 110°C for 12 hours to obtain the NFPP positive electrode plate. The resulting positive eletrode plate was cut into 14 mm-diameter discs for later use.

### Testing Methods and Equipment

### Measurement of Exposed First Particle Number on Sodium Supplement Agent Body Surface

The sodium supplement material was observed under SEM at 10,000× magnification. Five random 300 nm × 200 nm regions were selected in the field of view. The number of particles (including conductive agent particles and catalyst particles) exposed on the sodium supplement agent body surface within each region was recorded. The average value across the five regions was calculated as the number of exposed first particles per unit area.

### Oxidative Decomposition Potential Test

The first coin cell was subjected to an initial charge/discharge test using a LAND battery test system. The dQ/dV curve was obtained, and the oxidation peak in the dQ/dV curve corresponds to the oxidative decomposition reaction of the sodium supplement material. The potential at the oxidation peak represents the oxidative decomposition potential of the material.

### Material Particle Size Test

A laser particle size analyzer was used to measure the average particle size D50 of the sodium supplement material.

### First-cycle Charge/Discharge Capacity Test

The test temperature was 25°C. The coin cell battery was first charged at a constant current of 0.1C to 4.1V, followed by a 10 min rest. Then it was discharged at a constant current of 0.1C to 2V, followed by another 10 min rest. The charge capacity during the first charge phase was recorded as the first-cycle charge capacity (unit: mAh/g), and the discharge capacity during the first discharge phase was recorded as the first-cycle discharge capacity (unit: mAh/g).

### Cycling Performance Test

The test temperature was 25°C. The coin cell battery was charged to 4V at a constant current of 0.1C, rested for 10 minutes, and then discharged to 2V at 0.1C. The capacity obtained from this step was recorded as the initial discharge capacity Cᵢ. Subsequently, 20 cycles of 0.1C charge/0.1C discharge testing were performed, and the discharge capacity of the 20th cycle was recorded. The cycle capacity retention rate = (discharge capacity of the 20th cycle / initial discharge capacity Cᵢ) × 100%.

**Table 1: Preparation Parameters of Examples 1 to 14 and Comparative Examples 1 to 3**

| | Sodium supplement agent raw material | | Conductive agent | | Catalyst | | Number of per unit area (Unit) | D50 of sodium suppleme nt material (µm) |
|---|---|---|---|---|---|---|---|---|
| | Type | Conten t (%) | Type | Conten t (%) | Type | Conten t (%) | | |
| Example 1 | Na₂C₄O₄ | 60 | Super P | 20 | TiO₂ | 20 | 6 | 0.83 |
| Example 2 | Na₂C₄O₄ | 50 | Super P | 30 | TiO₂ | 20 | 8 | 0.98 |
| Example 3 | Na₂C₄O₄ | 40 | Super P | 40 | TiO₂ | 20 | 12 | 0.79 |
| Example 4 | Na₂C₄O₄ | 70 | Super P | 10 | TiO₂ | 20 | 4 | 0.75 |
| Example 5 | Na₂C₄O₄ | 80 | Super P | 10 | TiO₂ | 10 | 4 | 0.85 |
| Example 6 | C₆H₅Na₃ O₇ | 60 | Super P | 20 | TiO₂ | 20 | 5 | 0.93 |
| Example 7 | Na₂C₂O₄ | 60 | Super P | 20 | TiO₂ | 20 | 4 | 0.88 |
| Example 8 | Na₂C₆O₆ | 60 | Super P | 20 | TiO₂ | 20 | 6 | 0.78 |
| Example 9 | Na₂C₄O₄ | 60 | rGO | 20 | TiO₂ | 20 | 5 | 1.02 |
| Example 10 | Na₂C₄O₄ | 60 | CNT | 20 | TiO₂ | 20 | 4 | 0.89 |
| Example 11 | Na₂C₄O₄ | 60 | ACET | 20 | TiO₂ | 20 | 5 | 0.93 |
| Example 12 | Na₂C₄O₄ | 60 | Super P | 20 | MnO₂ | 20 | 7 | 0.73 |
| Example 13 | Na₂C₄O₄ | 60 | Super P | 20 | SnO₂ | 20 | 4 | 0.82 |
| Example 14 | Na₂C₄O₄ | 60 | Super P | 20 | ZrO₂ | 20 | 6 | 1.11 |
| Comparativ e Example 1 | Na₂C₄O₄ | 100 | / | 0 | / | 0 | / | 0.80 |
| Comparativ e Example 2 (physical mixture) | Na₂C₄O₄ | 60 | Super P | 20 | TiO₂ | 20 | / | 0.75 |
| Comparativ e Example 3 | / | / | / | / | / | / | / | / |

In Table 1, the symbol "/" indicates that the relevant preparation parameter does not exist.

**Table 2: Preparation Parameters of Examples 1, Example 15 to 17**

| | Calcination temp. (°C) | Calcination time (h) | Number of per unit area(Unit) | D50 of sodium supplement material (µm) |
|---|---|---|---|---|
| Example1 | 400 | 6 | 6 | 0.83 |
| Example15 | 500 | 4 | 4 | 1.03 |
| Example16 | 300 | 8 | 5 | 0.87 |
| Example17 | 450 | 5 | 4 | 0.89 |

**Table 3: Performance Data of the First Coin cells in Examples and Comparative Examples**

| | First-cycle charge capacity (mAh/g) | Potential corresponding to the oxidative peak in the dQ/dV curve (V) |
|---|---|---|
| Example 1 | 364.1 | 3.50 |
| Example 2 | 365.8 | 3.45 |
| Example 3 | 366.1 | 3.40 |
| Example 4 | 361.4 | 3.85 |
| Example 5 | 360.2 | 3.95 |
| Example 6 | 362.0 | 3.85 |
| Example 7 | 363.7 | 3.89 |
| Example 8 | 358.5 | 3.92 |
| Example 9 | 359.5 | 3.80 |
| Example 10 | 360.1 | 3.78 |
| Example 11 | 359.9 | 3.82 |
| Example 12 | 362.3 | 3.84 |
| Example 13 | 358.7 | 3.85 |
| Example 14 | 359.4 | 3.80 |
| Example 15 | 363.8 | 3.52 |
| Example 16 | 358.1 | 3.92 |
| Example 17 | 361.4 | 3.68 |
| Comparative Example 1 | 348.0 | 4.23 |
| Comparative Example 2 | 355.1 | 4.02 |
| Comparative Example 3 | / | / |

| | | |
|---|---|---|
| Table 3 uses "/" to indicate that the relevant test parameters do not exit. | | |

It can be seen from Examples 1 to 17 and Comparative Examples 1, Comparative Example 2 in Table 1, 2 and 3 that Comparative Example 1 involves only simple crushing of commercially available sodium supplement agent raw materials, lacking the structure of the sodium supplement material claimed in the present disclosure, thereby the oxidative decomposition potential of its sodium supplement material is high, and the first-cycle charge capacity of the first coin cell is low, making it difficult to improve the first-cycle sodium supplementation efficacy. Comparative Example 2 uses a physical mixture of sodium supplement agent raw material, conductive agent, and catalyst. When incorporated into the positive electrode plate, the conductive agent and catalyst disperse within the positive active material, reducing their contact probability with the sodium supplement agent due to interference from positive active material particles. This limits the effectiveness of the conductive agent and catalyst, resulting in a similarly high oxidative decomposition potential and low first-cycle charge capacity, failing to enhance sodium supplementation performance. In contrast, the sodium supplement material of the present disclosure exhibits a lower oxidative decomposition potential and significantly higher first-cycle charge capacity in the first coin cell, demonstrating that the sodium supplement material of the present disclosure effectively improves first-cycle sodium supplementation.

The type and content of sodium supplement agent raw material, type and content of conductive agent, type and content of catalyst and particle size of the sodium supplement material also influence sodium-ion battery performance. Examples 2 to 14 show that, while maintaining the structure of the present disclosure, optimizing these parameters within the claimed ranges enhances the first-cycle charge capacity of sodium-ion batteries.

Calcination time and temperature further impact performance. Examples 1 and 15 to 17 demonstrate that adjusting these parameters within the claimed ranges, while maintaining the structure, yields sodium-ion batteries with high first-cycle charge capacities.

FIG. 1 shows the SEM image of the prepared sodiation supplement material in Example 1. As seen in FIG. 1, within a unit area of the sodiation supplement material (indicated by the dashed box), multiple particles are distributed. These particles are conductive agent particles and catalyst particles, referred to as first particles. A portion of the first particles is embedded within the pre-sodiation agent matrix, while the remaining portion is exposed on the surface of the matrix, forming a structure where the first particles are partially encapsulated by the pre-sodiation agent. The number of first particles in the unit area is 7, labeled as P1 to P7.

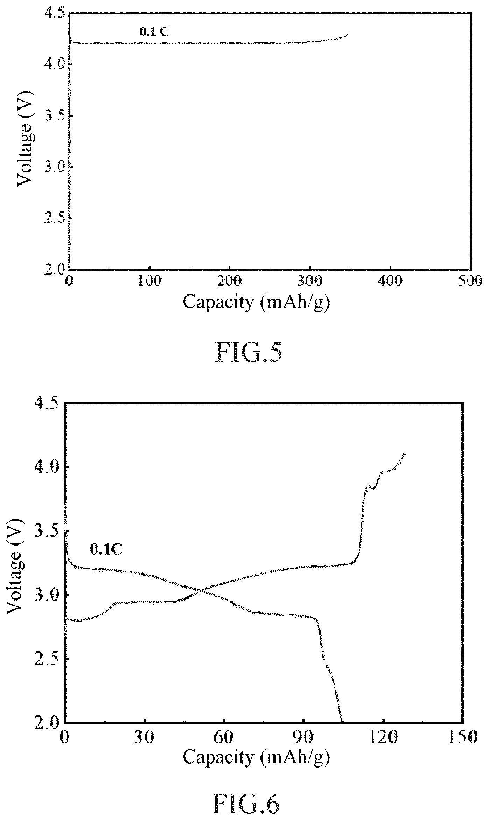

FIG. 4 shows the first-cycle charge/discharge curve of the first coin cell in Example 1. It can be seen from FIG. 4 that the first-cycle charge capacity of the first coin cell in Example 1 is 364.1 mAh/g. The dQ/dV curve obtained from the initial charge/discharge test of the first coin cell in Example 1 determines that the oxidative decomposition potential of the sodium supplement material prepared in Example 1 is 3.50V. FIG. 5 shows the first-cycle charge/discharge curve of the first coin cell in Comparative Example 1. It can be seen from FIG. 5 that the first-cycle charge capacity of the first coin cell in Comparative Example 1 is 348 mAh/g. The dQ/dV curve obtained from the initial charge/discharge test of the first coin cell in Comparative Example 1 determines that the oxidative decomposition potential of Comparative Example 1 is 4.23V. This confirms the lower oxidative decomposition potential of the sodium supplement material of the present disclosure.

**Table 4: Performance Data of the Second Coin cells in Examples and Comparative Examples**

| | First-cycle charge capacity (mAh/g) | First-cycle discharge capacity (mAh/g) | 20-cycle capacity retention (%) |
|---|---|---|---|
| Example 1 | 127.7 | 104.6 | 99.50 |
| Example 2 | 127.5 | 104.2 | 99.52 |
| Example 3 | 126.5 | 104.5 | 99.48 |
| Example 4 | 127.2 | 104.2 | 99.45 |
| Example 5 | 126.7 | 104.1 | 99.33 |
| Example 6 | 127.3 | 104.2 | 99.41 |
| Example 7 | 127.3 | 104.2 | 99.39 |
| Example 8 | 125.7 | 104.1 | 99.37 |
| Example 9 | 123.3 | 104.2 | 99.48 |
| Example 10 | 124.5 | 103.8 | 99.46 |
| Example 11 | 125.5 | 103.5 | 99.32 |
| Example 12 | 125.4 | 103.4 | 99.24 |
| Example 13 | 125.5 | 103.9 | 99.44 |
| Example 14 | 125.9 | 103.7 | 99.41 |
| Example 15 | 127.2 | 104.4 | 99.49 |
| Example 16 | 119.1 | 103.3 | 99.36 |
| Example 17 | 125.4 | 103.9 | 99.42 |
| Comparative Example 1 | 115.1 | 100.8 | 98.23 |
| Comparative Example 2 | 117.2 | 102.9 | 99.25 |
| Comparative Example 3 | 112 | 101.5 | 98.46 |

Based on Tables 1, 2, and 4, as observed from Example 1 and Comparative Examples 1 to 3, when simply performing crushing treatment on commercial sodium supplement agent raw materials (Comparative Example 1) or directly physically mixing sodium supplement agent raw materials with conductive agents and catalysts (Comparative Examples 2 to 3), the second coin cells exhibit low first-cycle charge capacity and first-cycle discharge capacity due to the lack of the sodium supplement material structure claimed in the present disclosure (Comparative Examples 1 to 2) or complete lack of sodium supplement material (Comparative Example 3), resulting in poor first-cycle Coulombic efficiency. This approach fails to enhance the energy density and cycling performance of sodium-ion batteries. Moreover, the direct physical mixing of raw materials in Comparative Example 2 leads to low actual oxidative decomposition efficiency of the prepared sodium supplement material, further hindering battery performance improvement. In contrast, the second coin cells of the present disclosure demonstrate significantly improved first-cycle charge capacity, first-cycle discharge capacity, and 20-cycle capacity retention rate, thereby effectively enhancing both energy density and cycling performance of sodium-ion batteries.

The type and content of sodium supplement agent raw material, type and content of conductive agent, type and content of catalyst and particle size of the sodium supplement material also influence sodium-ion battery performance. Examples 2 to 14 show that, while maintaining the structure of the present disclosure, optimizing these parameters within the claimed ranges yields NFPP sodium-ion batteries with superior first-cycle charge/discharge capacities and excellent cycling performance.

Calcination time and temperature further impact performance. Examples 1 and 15 to 17 demonstrate that adjusting these parameters within the claimed ranges, while maintaining the structure, yields NFPP sodium-ion batteries with superior first-cycle charge/discharge capacities and excellent cycling performance.

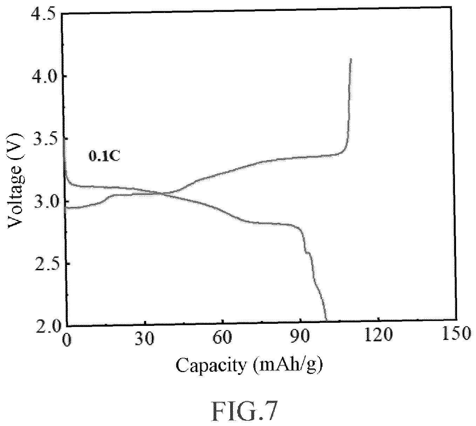

FIG. 6 shows the first-cycle charge/discharge curve of the second coin cell in Example 1, with a first-cycle charge capacity of 127.7 mAh/g and discharge capacity of 104.6 mAh/g. FIG. 7 shows the first-cycle charge/discharge curve of the second coin cell in Comparative Example 1, with a first-cycle charge capacity of 115.1 mAh/gand discharge capacity of 100.8 mAh/g. Additionally, Example 1 exhibits improved 20-cycle capacity retention compared to Comparative Example 1. These results confirm that the sodium supplement material of the present disclosure effectively mitigates first-cycle sodium loss in NFPP positive electrode plates, demonstrating excellent compatibility and enhancing energy density and cycling performance of sodium-ion batteries.

The present disclosure has detailed a sodium supplement material, its preparation method, positive electrode plate, and sodium-ion battery. Specific examples were used to explain the principles and implementations of the present disclosure. The descriptions of the above examples are intended solely to aid understanding of the technical solutions and core inventive concepts of the present disclosure. For those skilled in the art, modifications to specific embodiments and scopes of application may arise based on the ideas presented herein. Therefore, this specification should not be construed as limiting the scope of the present disclosure.

## Claims

1. A sodium supplement material, comprising a sodium supplement agent body and first particles exposed on a surface of the sodium supplement agent body, and the first particles comprise one or more conductive agent particles and one or more catalyst particles;
wherein in any 300 nm × 200 nm region on the surface of the sodium supplement material, a number of first particles ranges from 2 to 20.

2. The sodium supplement material according to claim 1, wherein the first particles are partially encapsulated by the sodium supplement agent body, which is formed by melting and cooling a sodium supplement agent raw material.

3. The sodium supplement material according to any one of claims 1 to 2, wherein the sodium supplement material comprises the sodium supplement agent body, conductive agent particles, and catalyst particles;
wherein based on a total mass of the sodium supplement material, the sodium supplement agent body has a mass percentage of 40% to 80%, the conductive agent particles have a mass percentage of 10% to 40%, and the catalyst particles have a mass percentage of 10% to 20%.

4. The sodium supplement material according to any one of claims 1 to 3, wherein the sodium supplement material has an average particle size D50 of 0.7 µm to 2.0 µm.

5. The sodium supplement material according to any one of claims 1 to 4, wherein a diameter of a portion of the first particles exposed on the sodium supplement agent body surface is 10 nm to 70 nm.

6. The sodium supplement material according to any one of claims 1 to 5, wherein the catalyst particles comprise at least one selected from a group consisting of titanium dioxide, manganese dioxide, tin dioxide, ruthenium dioxide, molybdenum dioxide, manganese oxide, zirconium dioxide, tricobalt tetraoxide, and trimanganese tetraoxide.

7. The sodium supplement material according to any one of claims 1 to 6, wherein the sodium supplement agent body comprises at least one selected from a group consisting of one of Na₂C₄O₄, Na₂CO₃, CH₃COONa, C₆H₅Na₃O₇, Na₂C₂O₄, and Na₂C₆O₆.

8. The sodium supplement material according to any one of claims 1 to 7, wherein the conductive agent particles comprise at least one selected from a group consisting of conductive carbon black, carbon nanotubes, Ketjenblack, acetylene black, carbon black graphene, graphene oxide, and reduced graphene oxide.

9. A preparation method for the sodium supplement material according to any one of claims 1 to 8, comprising:
mixing a particle-size-controlled sodium supplement agent raw material with conductive agent particles and catalyst particles to obtain a mixture, wherein the particle-size-controlled sodium supplement agent raw material has an average particle size D50 of 0.3 µm to 2.0 µm;
calcining the mixture under a gaseous atmosphere at a temperature of 300°C to 500°C for 1 to 8 hours to obtain the sodium supplement material.

10. The preparation method according to claim 9, wherein during calcination, the sodium supplement agent raw material melts, and the conductive agent particles and catalyst particles disperse into the molten sodium supplement agent raw material;
during cooling, the sodium supplement agent raw material solidifies and precipitates using the conductive agent particles as a skeleton to form the sodium supplement agent body;
wherein conductive agent particles and catalyst particles are partially embedded in the sodium supplement agent body, with another portion exposed on the sodium supplement agent body surface.

11. A positive electrode plate, comprising a positive current collector and a positive active material layer disposed on at least one surface of the current collector;
wherein the positive active material layer comprises a sodium supplement material according to any one of claims 1 to 8, or a sodium supplement material prepared by a preparation method according to any one of claims 9 to 10.

12. A sodium-ion battery, comprising a positive electrode plate according to claim 11.

13. An energy storage device (1), comprising a casing and at least one sodium-ion battery according to claim 12, wherein the sodium-ion battery is housed within the casing.

14. An electric apparatus, comprising an energy storage device (1) according to claim 13, wherein the energy storage device (1) supplies power to the electric apparatus.
